# EUROPEAN PATENT SPECIFICATION

(11) **EP 4 344 438 B1**
(45) Date of publication and mention of the grant of the patent: **09.09.2026**
(21) Application number: 22838157.0
(22) Date of filing: 28.06.2022
(51) Int. Cl.: D01D 5/08, D01F 1/10, D01F 6/62, B01J 13/12, C08L 67/04

(54) **MICROCAPSULE-DOPED POLYCAPROLACTONE FIBERS PRODUCED BY THE MELT SPINNING METHOD**
MIKROKAPSEL-DOTIERTE POLYCAPROLACTONFASERN HERGESTELLT NACH DEM SCHMELZSPINNVERFAHREN
FIBRES DE POLYCAPROLACTONE DOPÉES PAR MICROCAPSULES PRODUITES PAR LE PROCÉDÉ DE FILAGE PAR FUSION

(30) Priority: 08.07.2021 TR 202111175
(43) Date of publication of application: 03.04.2024
(73) Proprietor: Dokuz Eylül Üniversitesi Rektörlügü, Alsancak, Izmir (TR); Izmir Katip Celebi Universitesi, Yerleskesi Izmir (TR)
(72) Inventor: ERDO AN, Ümit Halis, 35160 zmir (TR); SELL , Figen, 35160 zmir (TR); ERKAN, Gökhan, 35160 zmir (TR); SEYDIBEYO LU, Mehmet Özgür, 35620 zmir (TR)
(74) Representative: Yalçiner Patent and Consulting Ltd.
(86) International application number: PCT/TR2022/050668
(87) International publication number: WO 2023/282875

(56) References cited:
- EP-B1- 2 046 572
- CN-A- 1 807 707
- CN-A- 102 926 217
- CN-A- 104 878 608
- KR-B1- 101 350 993
- US-A1- 2005 161 857
- GANESAN ET AL: "Microencapsulation of copper enriched herbals for curative garments", INDIAN JOURNAL OF TRADITIONAL KNOWLEDGE, NATIONAL INSTITUTE OF SCIENCE COMMUNICATION AND INFORMATION RESOURCES, NEW DELHI - INDIA, vol. 11, no. 3, 1 July 2012 (2012-07-01), pages 532 - 536, XP018029627

## Description

### Technical Field of the Invention

The invention relates to microcapsule-doped biodegradable polycaprolactone (PCL) fibers, which are used in the health, textile, plastic, automotive and agricultural industry, and the production of these fibers by using the melt spinning method.

### State of the Art of the Invention (Prior Art)

In recent years, many studies have been carried out on micro and nanofiber production from biodegradable polymers with wet spinning, melt spinning and electrospinning method. However, studies on the melt spinning of biodegradable polymers are limited. Commercial production of these fibers and the development of fiber properties are ongoing.

Functionalization of textile fibers can be performed during and after production. Modification of the fibers during production can be carried out by adding functional additives to the fiber in various ratios, using processing aids, changing the fiber production parameters, changing the fiber cross section and fiber thickness, while post-production modifications can be carried out by applying various finishing processes or coating the fiber surface. Microcapsules are also among the additives used to functionalize fibers. In the literature, there are studies on composite fiber production with microcapsules containing different materials such as active pharmaceutical ingredients, essential oils, and phase change materials. These studies were mostly conducted with the wet spinning and electrospinning method.

The microencapsulation process is the process of trapping various active substances in solid, liquid or gaseous form to form micron-sized particles with a suitable structure. These products which contain different active ingredients obtained as a result of the microencapsulation process are called microcapsules.

Microcapsules can be added into the fibers during fiber production or to the fiber surface through finishing processes after fiber production. The presence of microcapsules in the fiber ensures long-term preservation of their activity and controlled release, safe transport of the active ingredient in the core through the microcapsule shell, and protection from external environmental conditions. In addition, it increases the disintegration time of the capsules against external conditions such as temperature and mechanical impact during washing. Various fiber spinning methods are used to add microcapsules to the fiber. One of these methods is the solution spinning. In solution spinning, the polymer solution prepared with appropriate solvent in different concentrations is delivered to the spinneret by pressure, and after exiting the spinneret, the solvent on the filaments is removed by different methods. The solution spinning is divided into two as wet spinning and the dry spinning method. In wet spinning, the solvent is removed in the coagulation (precipitation) bath and in dry spinning the solvent is removed with hot air or hot gas.

The electrospinning method, which is another fiber spinning method in which microcapsules are used as additives, is based on fiber production using electrostatic force. In this method, in which micro and nano-sized fibers are produced, the polymer solution or polymer melt is placed in the syringe/needle connected to the positive part of the high voltage source, and the collecting surface is set to be negatively charged so that an electrical field is formed between the two surfaces. The needle, which provides the transmission of the polymer solution to the electrical field, serves as a spinneret in this method. The production capacity of the electrospinning method is low and the production speed is slow. The use of solvents can cause additional costs and toxic effects. The production of yarn/filaments with electrospinning that can be turned into woven and knitted structures has not yet been fully commercialized.

In this invention, the melt spinning method was used for the production of microcapsule-doped PCL fiber. The melt spinning method, which is widely used in the production of commercial synthetic fibers, has a simpler production line than the solution spinning, has a high production speed. It is economically advantageous since the removal of the solvent, which is the most expensive part of fiber production, is not present in this production method. Another advantage of the melt spinning method is that the risk of solvents in the coagulation bath dissolving the microcapsule shell polymer and causing deterioration is not present. In addition, the melt spinning method has less environmental load due to its simple production line and the lack of solvent (additional chemicals) in production.

As a result, in the state of the art, it is known to obtain fibers from biodegradable polymers by the melt spinning method. In the literature, there are also composite fibers produced from thermoplastic polymers and microcapsules with the melt spinning method. However, there is no study on microcapsule-doped biodegradable polycaprolactone fibers produced by the melt spinning method in the literature and industry.

Patent document US 2020/0299867A1 relates to biodegradable polyamide fiber and its production method. Here, the biodegradable agent is added to the polyamide by the melt spinning method, thereby obtaining the biodegradable polyamide fiber. The relevant patent relates to the polyamide fiber and states that a biodegradable agent (PCL is one of these agents) can be used as an additive in the production of polyamide fiber and thus fiber can be biodegradable. In this study, there is no fiber production from the PCL polymer by the melt spinning method. There is also no use of microcapsules.

In their study, G. Fredi et al. focused on the development of polypropylene (PP) filaments containing paraffin microcapsules (MC), which are intended to be incorporated into hybrid yarns to produce multifunctional thermoplastic filaments for thermal energy storage (TES). Here, PP-MC filaments were obtained by the melt spinning method. The fiber spinning polymer used in the relevant study is completely different from the polymer used in the invention, and it is not biodegradable. The additive used in the invention is also completely different. In the invention, microcapsules containing biodegradable shell and plant extract were used as additives. In the study conducted by G. Fredi et al., microcapsules containing paraffin active ingredient and melamine formaldehyde shell are used as additives.

Ganesan et al. ("Microencapsulation of copper enriched herbals for curative garments", in Indian Journal of Traditional Knowledge, National Institute of Science Communication and Information Resources, New Delhi, India, vol. 11, no. 3, pages 532-536) discloses the treatment of cotton fabric with antibacterial microcapsules comprising Momordica Charantia (a.k.a. bitter gourd) extract, wherein the wall material of the microcapsules is biodegradable but non-melting gum acacia.

### Brief Description and Objects of the Invention

The present invention relates to the production of microcapsule-doped functional textile fibers from biodegradable polymers with melt spinning method which meets the aforementioned needs, eliminates all the disadvantages and provides some additional advantages.

With this invention, microcapsule-doped biodegradable fibers with functional properties were produced. As the production method, environment-friendly melt spinning method with high production capacity was used. The biodegradable polymer has been used both in fiber spinning and microcapsule production. The melting point of the biodegradable shell polymer used in microcapsule production has been selected considerably higher than the melting point of the biodegradable PCL polymer used in fiber production. Thanks to the ability to work at low extrusion temperatures with PCL, it has been possible to use microcapsules as an additive in melt fiber spinning without causing any damage to the structural integrity of microcapsules. *Momordica Charantia L.* plant extract in oil was used as the microcapsule active ingredient. This plant extract was chosen due to its antimicrobial, anti-inflammatory and antioxidant properties, and it is aimed to provide an antimicrobial effect and to show wound healing effect in the field of application.

Thanks to the use of microcapsules as additives, it has been possible to protect the core ingredient from environmental effects, to reduce the evaporation rate of the core ingredient to the external environment, to carry the liquids in solid form, and to provide a controlled release. The functional additive microcapsules were first mixed with PCL polymer with a twin-screw extruder and compounds were prepared. Thus, microcapsules were added into the PCL polymer. These prepared compounds were used as raw materials in the melt spinning, and filaments containing microcapsules were produced by the melt spinning method.. In addition to supporting sustainable production with the production of composite filament from biodegradable polymer, an environmentally friendly functional textile product has been developed.

Products are made from PCL polymer in the fields of tissue, bone, cartilage and nerve engineering, and research on the PCL polymer mostly focuses on controlled release drug delivery systems, cardiovascular vascular applications, tissue scaffolds and long-term/short-term implant applications. PCL-based materials are also commonly used in surgical sutures and wound dressings. Within the scope of this invention, it is aimed to functionalize the melt-spun PCL filaments for the field of use by using the microcapsule additive.

With this invention, as the microcapsule shell polymer is biodegradable, it was possible to protect the core/active ingredient and release it over time. In addition, biodegradable textile fibers provide advantages in short-term applications by biodegradating at the end of a certain period, thus, eliminating the additional removal cost of the product. The ability to work at low extrusion temperatures with PCL has enabled the incorporation of microcapsules as additives to the filament with melt spinning method.

Within the scope of the invention, biodegradable PCL polymer and biodegradable polyester as shell polymer was used in fiber production and in microcapsule production, respectively. Within the scope of the invention, the melting point of the PCL polymer used in fiber production is lower than the melting point of the microcapsule shell polymer, which enables the microcapsules to be doped into the fibers without causing any damage to the structural integrity of microcapsules. In addition, the fact that the microcapsule shell polymer is biodegradable makes it possible to release the active ingredient in a controlled manner so that the functional property of the fiber is effective for a long time.

### Definitions of Figures Describing the Invention

The figures and related descriptions required to better understand the subject of the invention are as follows.

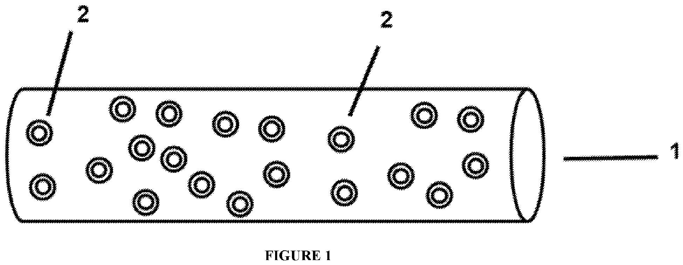

**Figure 1****:** Schematic drawing of the microcapsule-doped fibre is shown.

### Element Numbers of the Invention

1: Fiber
2: Microcapsule

### Detailed Description of the Invention

In this detailed description, the microcapsule production and the microcapsule-doped biodegradable fiber production are described only for clarifying the subject matter in a manner such that they create no limiting effect.

The biodegradable polycaprolactone fiber of the invention comprises;
a) Biodegradable polycaprolactone polymer,
b) Microcapsule, whose shell polymer comprises biodegradable polyester and whose core ingredient comprises the plant extract *Momordica Charantia L.* in oil.

The melting point of the biodegradable polyester polymer shell in step b is higher than the biodegradable polycaprolactone polymer in step a.

The method of producing the biodegradable fiber fundamentally comprises the process steps of:
- Microcapsule production
- Production of microcapsule-doped polycaprolactone granules
- Microcapsule-doped biodegradable polycaprolactone fiber production by melt spinning method.

### Production of microcapsules

Water-insoluble biodegradable polyesters were used as shell polymers in the production of microcapsules. The plant extract *Momordica Charantia L.* in oil was used as the core ingredient. The microcapsules with different active ingredient/shell ratios were prepared using the emulsion/solvent evaporation method and the microcapsules with a particle size of 10 microns and below, were successfully manufactured. The prominent feature of this invention is that the melting point (170-190°C) of the biodegradable shell polymers used in microcapsule production is selected as higher than the melting point (55-60°C) of the biodegradable polymer used in fiber production. The extrusion temperature of the PCL polymer is below the melting point of the microcapsule shell polymer. In this way, the temperatures applied during PCL fiber production did not cause damage in the microcapsule integrity. Hence, the microcapsules were prevented from being damaged during both compound preparation and fiber spinning (heat treatment).

The method of producing the microcapsules, which is the first stage of the invention of the application, comprises the process steps of;
- Preparing two separate solutions as organic phase and water phase and forming the emulsion solution by combining these prepared mixtures in a selected ratio,
- Mixing and dissolving the water-insoluble biodegradable polyesters selected as microcapsule shell polymers in appropriate solvents (chloroform, dichloromethane, dichloroethane, tetrahydrofuran) at ratios of 1% to 4% (w/v) for 6-18 hours to prepare the organic phase,
- , Adding Momordica Charantia L. plant extract in oil selected as the core ingredient into the organic phase in such a way that the active ingredient/shell polymer ratio varies between 1 and ¼ (w/w) and mixing to obtain a homogeneous mixture,
- For the preparation of the water phase, mixing sodiumlaurylsulfate selected as the surfactant at the ratio of 2% w/v, in the ultrasonic bath for 1-3 hours at a temperature ranging from 25-60°C
- Obtaining emulsion by the addition of the prepared organic phase to the prepared water phase at a ratio of 1/10 v/v and mixing with a high-speed mixer at a speed ranging from 4000-12000 rpm at 25-40°C for 1-2 hours,
- Removing the solvent and obtaining microcapsules after stirring the prepared stable emulsion for 5-16 hours at 25-70°C with a high-speed mixer at a speed of 4000-12000 rpm,
- Precipitating the resulting microcapsules in 5-20 minutes at a speed ranging from 3000-10000 rpm with the centrifugal device,
- Rinsing the precipitated microcapsules with purified water,
- Drying the microcapsules rinsed with purified water and obtaining microcapsules in powder form

### Microcapsule-doped biodegradable fiber production

Microcapsule-doped biodegradable fibers were prepared using the melt spinning method. Polycaprolactone (PCL) polymer with a low melting point (55-60°C) was used as the fiber production polymer. To enable the addition of microcapsules to the fiber, polymer compounds (doped granules) were first prepared in a twin-screw extruder. In fiber spinning, these microcapsule-doped polymeric compounds in granule form were used as raw materials

The method of producing biodegradable PCL fiber in which the microcapsules are added into the fiber, which is the second stage of the invention of the application, comprises the process steps of:
- Mechanical mixing of microcapsules with PCL polymer in ratios between 0.5% and 5% (w/w), for fiber production
- Homogeneous mixing of the mechanically mixed fiber polymer and microcapsules in a twin-screw extruder at the feed rate of 10-100 rpm, the screw speed of 100-150 rpm and extrusion temperatures of 60-110°C, granulating the compounds solidified in water at the extruder nozzle to use in fiber production,
- Homogeneous mixing of compounds in granular form in a single screw extruder at extrusion temperatures ranging between 60-110°C in the melt spinning device, delivering the prepared melt to the spinneret by pressure, using different spinneret configurations (with different numbers and diameters of holes) in production and after exiting the spinneret, cooling with air and turning into fibers following the drawing process,

A schematic drawing of the microcapsule-doped fibers is given in Figure 1. The produced fiber (1) is a filament with a circular cross-section and the microcapsules (2) containing plant extract in oil are dispersed in the fiber (1).

## Claims

1. A biodegradable polycaprolactone fiber, **characterized in that** it comprises:
a) Biodegradable polycaprolactone polymer,
b) Microcapsule, whose shell polymer comprises biodegradable polyester and whose core ingredient comprises the plant extract *Momordica Charantia L.* in oil
and the melting point of the biodegradable polyester polymer shell in step b is higher than the biodegradable polycaprolactone polymer in step a.

2. A method of producing the biodegradable fiber according to claim 1, **characterized in that** it comprises the process steps of;
- Microcapsule production
- Production of microcapsule-doped polycaprolactone granules
- Production of microcapsule-doped biodegradable polycaprolactone fiber by melt spinning method.

3. A method of producing the biodegradable fiber according to claim 2, **characterized in that** it comprises the process steps of:
- Mixing and dissolving the biodegradable polyesters selected as microcapsule shell polymers for 6-18 hours at ratios of 1% to 4% (w/v) to prepare the organic phase,
- Adding Momordica Charantia L. plant extract in oil selected as the core ingredient into the organic phase in such a way that the active ingredient/shell polymer ratio varies between 1 and ¼ (w/w) and mixing to obtain a homogeneous mixture,
- For the preparation of the water phase, mixing sodiumlaurylsulfate, selected as the surfactant at the ratio of 2% w/v in the ultrasonic bath for 1-3 hours at a temperature ranging from 25-60°C
- Obtaining emulsion by the addition of the prepared organic phase to the prepared water phase at a ratio of 1/10 v/v and mixing with a high-speed mixer at a speed ranging from 4000-12000 rpm at 25-40°C for 1-2 hours,
- Removing the solvent and obtaining microcapsules after stirring the prepared stable emulsion for 5-16 hours at 25-70°C with a high-speed mixer at a speed of 4000-12000 rpm,
- Precipitating the resulting microcapsules in 5-20 minutes at a speed ranging from 3000-10000 rpm with the centrifugal device,
- Rinsing the precipitated microcapsules with purified water,
- Drying the microcapsules rinsed with purified water and obtaining microcapsules in powder form
- Mechanically mixing the prepared microcapsules with the PCL polymer to be used in fiber production in ratios between 0.5% and 5% (w/w),
- Homogeneously mixing the mechanically mixed fiber polymer and microcapsules in a twin-screw extruder device at the feed rate of 10-100 rpm, the screw speed of 100-150 rpm and extrusion temperatures of 60-110°C, granulating the compounds solidified in water at the extruder nozzle for fiber production,
- Homogeneous mixing of polymeric compounds in granular form in a single screw extruder at extrusion temperatures ranging between 60-110°C in the melt spinning device, delivering the prepared melt to the spinneret by pressure, using different spinneret configurations in production and after exiting the spinneret, cooling with air and turning into fibers following the drawing process,

## Patentansprüche

1. Eine biologisch abbaubare Polycaprolactonfaser, **dadurch gekennzeichnet, dass** sie umfasst:
a) Biologisch abbaubares Polycaprolacton-Polymer,
b) Mikrokapsel, deren Hüllpolymer aus biologisch abbaubarem Polyester besteht und deren Kernbestandteil aus dem Pflanzenextrakt *Momordica Charantia L.* in Öl besteht
und der Schmelzpunkt der biologisch abbaubaren Polyesterpolymerhülle in Schritt b ist höher als der des biologisch abbaubaren Polycaprolactonpolymers in Schritt a.

2. Verfahren zur Herstellung der biologisch abbaubaren Faser nach Anspruch 1, **dadurch gekennzeichnet, dass** es die folgenden Verfahrensschritte umfasst;
- Herstellung von Mikrokapseln
- Herstellung von mit Mikrokapseln dotierten Polycaprolacton-Granulaten
- Herstellung von mit Mikrokapseln dotierten, biologisch abbaubaren Polycaprolactonfasern mittels Schmelzspinnverfahren.

3. Verfahren zur Herstellung der biologisch abbaubaren Faser nach Anspruch 2, **dadurch gekennzeichnet, dass** es die folgenden Verfahrensschritte umfasst:
- Mischen und Lösen der als Mikrokapselhüllenpolymere ausgewählten biologisch abbaubaren Polyester für 6-18 Stunden in Verhältnissen von 1% bis 4% (w/v) zur Herstellung der organischen Phase,
- Zugabe von Momordica Charantia L. Pflanzenextrakt in Öl, das als Kernbestandteil ausgewählt wurde, in die organische Phase, so dass das Verhältnis Wirkstoff/Hüllpolymer zwischen 1 und ¼ (w/w) variiert, und Mischen, um eine homogene Mischung zu erhalten,
- Zur Herstellung der Wasserphase Mischen von Natriumlaurylsulfat, ausgewählt als Tensid im Verhältnis 2% w/v im Ultraschallbad für 1-3 Stunden bei einer Temperatur im Bereich von 25-60°C
- Erhalten der Emulsion durch Zugabe der vorbereiteten organischen Phase zur vorbereiteten Wasserphase im Verhältnis 1/10 v/v und Mischen mit einem Hochgeschwindigkeitsmischer bei einer Drehzahl im Bereich von 4000-12000 U/min bei 25-40°C für 1-2 Stunden,
- Entfernen des Lösungsmittels und Erhalten von Mikrokapseln nach 5-16-stündigem Rühren der hergestellten stabilen Emulsion bei 25-70°C mit einem Hochgeschwindigkeitsmischer bei einer Drehzahl von 4000-12000 U/min,
- Fällung der resultierenden Mikrokapseln in 5-20 Minuten bei einer Drehzahl im Bereich von 3000-10000 U/min mit der Zentrifugalvorrichtung,
- Spülen der ausgefällten Mikrokapseln mit gereinigtem Wasser,
- Trocknung der mit gereinigtem Wasser gespülten Mikrokapseln und Gewinnung von Mikrokapseln in Pulverform
- Mechanisches Mischen der hergestellten Mikrokapseln mit dem bei der Faserherstellung einzusetzenden PCL-Polymer in Verhältnissen zwischen 0.5% und 5% (w/w),
- Homogenes Mischen des mechanisch gemischten Faserpolymers und der Mikrokapseln in einer Doppelschneckenextrudervorrichtung mit einer Zuführgeschwindigkeit von 10-100 U/min, einer Schneckendrehzahl von 100-150 U/min und Extrusionstemperaturen von 60-110°C, Granulieren der in Wasser erstarrten Verbindungen an der Extruderdüse zur Faserherstellung,
- Homogenes Mischen von polymeren Verbindungen in Granulatform in einem Einschneckenextruder bei Extrusionstemperaturen im Bereich von 60-110°C in der Schmelzspinnvorrichtung, Zuführen der vorbereiteten Schmelze zur Spinndüse durch Druck, Verwendung unterschiedlicher Spinndüsenkonfigurationen in der Herstellung und nach Austritt aus der Spinndüse, Abkühlen mit Luft und Umwandlung in Fasern nach dem Streckprozess.

## Revendications

1. Fibre de polycaprolactone biodégradable, **caractérisée en ce qu'**elle comprend :
a) Polymère de polycaprolactone biodégradable,
b) Microcapsule dont l'enveloppe polymère comprend du polyester biodégradable et dont l'ingrédient de base comprend l'extrait végétal de *Momordica charantia L.* dans de l'huile,
et le point de fusion de l'enveloppe polymère de polyester biodégradable de l'étape b est supérieur à celui du polymère de polycaprolactone biodégradable de l'étape a.

2. Procédé de production de la fibre biodégradable selon la revendication 1, **caractérisé en ce qu'**il comprend les étapes du processus suivantes :
- Produire les microcapsules,
- Produire les granulés de polycaprolactone dopés aux microcapsules,
- Produire les fibres de polycaprolactone biodégradables dopées aux microcapsules par le procédé de filage par fusion.

3. Procédé de production de la fibre biodégradable selon la revendication 2, **caractérisé en ce qu'**il comprend les étapes du processus suivantes :
- Mélanger et dissoudre les polyesters biodégradables choisis comme l'enveloppe polymères des microcapsules pendant 6-18 heures à des rapports de 1 % à 4 % (p/v) afin de préparer la phase organique,
- Ajouter l'extrait végétal de Momordica charantia L. choisi comme ingrédient de base, à la phase organique de manière à ce que le rapport entre la substance active et le polymère d'enveloppe varie entre 1 et ¼ (p/p), et mélanger afin d'obtenir un mélange homogène,
- Pour la préparation de la phase aqueuse, mélanger le laurylsulfate de sodium choisi comme tensioactif, dans un rapport de 2 % p/v dans un bain à ultrasons pendant 1-3 heures à une température comprise entre 25-60 °C,
- Obtenir l'émulsion en ajoutant la phase organique préparée à la phase aqueuse préparée dans un rapport de 1/10 v/v, et en mélangeant à l'aide d'un mélangeur à grande vitesse à une vitesse comprise entre 4000-12000 tr/min à 25-40 °C pendant 1-2 heures,
- Éliminer le solvant et obtenir des microcapsules après avoir agité l'émulsion stable préparée pendant 5-16 heures à 25-70 °C à l'aide d'un mélangeur à grande vitesse à une vitesse de 4000-12000 tr/min,
- Précipiter les microcapsules résultantes en 5-20 minutes à une vitesse comprise entre 3000-10000 tr/min à l'aide du dispositif centrifuge,
- Rincer les microcapsules précipitées à l'eau purifiée,
- Sécher les microcapsules rincées à l'eau purifiée et obtenir des microcapsules sous forme de poudre,
- Mélanger mécaniquement les microcapsules préparées avec le polymère PCL à utiliser dans la production de fibres dans des rapports compris entre 0.5 % et 5 % (p/p),
- Mélanger de manière homogène le polymère fibreux et les microcapsules qui sont mélangés mécaniquement dans une extrudeuse à double vis à une vitesse d'alimentation de 10-100 tr/min, une vitesse de vis de 100-150 tr/min et des températures d'extrusion de 60-110 °C, granuler les composés solidifiés dans l'eau à la buse de l'extrudeuse pour la production de fibres,
- Mélanger de manière homogène des composés polymères sous forme granulaire dans une extrudeuse monovis à des températures d'extrusion comprises entre 60-110 °C dans le dispositif de filage par fusion, acheminer la masse fondue préparée vers la filière sous pression, utiliser différentes configurations de filière lors de la production et après la sortie de la filière, refroidir à l'air et transformer en fibres à l'issue du processus d'étirage.
